# EUROPÄISCHE PATENTANMELDUNG

(11) **EP 1 722 534 A1**
(43) Veröffentlichungstag der Anmeldung: **15.11.2006**
(21) Anmeldenummer: 06112469.9
(22) Anmeldetag: 11.04.2006
(51) Int. Cl.: H04L 29/06, G06F 1/00

(54) **Eigenschaften-basierte Zuweisung von Ressourcen zu Sicherheitsdomänen**

(30) Priorität: 11.05.2005 DE 102005021854
(71) Anmelder: SIEMENS AKTIENGESELLSCHAFT, 80333 München (DE)
(72) Erfinder: Günther, Wolfgang, 81479, München (DE); Luft, Erik, 81377, München (DE)

(57) **Zusammenfassung**

Die Erfindung betrifft ein Verfahren zur optimierten Vergabe von Zugriffsrechten auf mittels eines Sicherheitsmanagementsystems verwaltete IT Ressourcen und ein entsprechend angepasstes Sicherheitsmanagementsystem. Erfindungsgemäß wird eine Sicherheitsdomäne nach Maßgabe wenigstens einer Eigenschaft von IT Ressourcen festgelegt und eine Mehrzahl von Berechtigungsprofilen für die Sicherheitsdomäne vorgesehen. Benutzergruppen werden der Domäne zugeordnet und mit für die Domäne vorgesehenen Profilen verknüpft. IT Ressourcen, für die das Sicherheitsmanagement verantwortlich zeichnet, werden nach Maßgabe der die Sicherheitsdomäne festlegenden Eigenschaft der Domäne zugeordnet, wodurch der Domäne zugeordnete Benutzergruppen nach Maßgabe der mit ihnen verknüpften Profilen Zugriffsrechte auf die der Domäne zugeordneten IT Ressourcen erhalten. Die Erfindung erlaubt, den Benutzergruppen auf die Erfordernisse der einzelnen Gruppen zugeschnittene Berechtigungen zu erteilen.

## Beschreibung

Die Erfindung betrifft ein Verfahren zur optimierten Vergabe von Zugriffsrechten auf mittels eines Sicherheitsmanagementsystems verwaltete IT-Ressourcen.

Der Aspekt der Sicherheit spielt bei Systemen im IT (Information Technology) Bereich eine immer größere Rolle. Im digitalen Zeitalter können nur geeignete Sicherheitsvorkehrungen garantieren, dass die Privatsphäre der Einzelnen geschützt bleibt und die allgemein akzeptierten Regeln im Umgang mit Personen und Geräten eingehalten werden. Daher spielen Sicherheitsaspekte praktisch bei jedem System aus dem IT-Bereich mit.

So ist auch beim Management von Netzen, man spricht hier häufig auch von TMN (Telecommunication Management Network), das Sicherheitsmanagement ein zentraler Bestandteil, gleichberechtigt neben anderen zentralen Funktionen, wie Fehlermanagement, Konfigurationsmanagement, Abrechnungsmanagement und Leistungsmanagement.

Das Sicherheitsmanagement eines IT-Systems hat die Aufgabe, Nutzern des Systems Zugriffsrechte (man spricht hier häufig auch von Berechtigungen) auf IT-Ressourcen des Systems im Zuständigkeitsbereich des Sicherheitsmanagements einzuräumen. Derartige Zugriffsrechte können ein Leserecht, ein Schreibrecht, ein Recht zum Löschen und ähnliche Rechte umfassen. Zur Vergabe von Rechten werden die Benutzer üblicherweise in Gruppen eingeteilt, denen jeweils bestimmte Rechte zugeteilt werden.

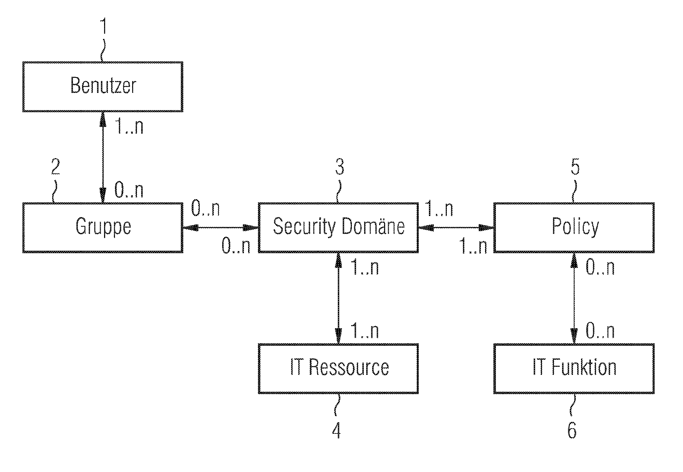

Das derzeit übliche Vorgehen wird im Folgenden detaillierter an Hand der Figur beschrieben. Die Figur zeigt ein Schema mit sechs Blöcken, die untereinander durch Zuordnungen verknüpft sind. Dabei werden Benutzer 1 Gruppen 2 zugeordnet. Die Gruppen wiederum sind verknüpft mit einem dritten Block 3, der Sicherheitsdomänen (Security Domäne) repräsentiert, welcher wiederum mit den Blöcken 4 (IT Ressource) und 5 (Policy) verknüpft ist. Der Block 5 (Policy) wiederum ist mit dem sechsten Block (6: IT-Funktion) verbunden. In diesem Schema umfassen die drei vertikal in der Mitte angeordneten Blöcke 2 (Gruppe), 3 (Sicherheitsdomäne) und 5 (Policy) jeweils Elemente, welche aus einem anderen Block stammen. Die Benutzergruppe 2 umfasst Benutzer, die Sicherheitsdomäne 3 IT-Ressourcen und die Policy 4 IT-Funktionen. Eine Policy, welche im Folgenden als Berechtigungsprofil bezeichnet wird, fasst in der Regel eine Reihe von IT-Funktionen zusammen, deren Ausführung dieses Berechtigungsprofil erlaubt. IT-Funktionen wären beispielsweise Zugriffsaktionen, wie Lesen, Schreiben und Löschen, können aber auch applikationsbezogene Aktionen, wie das Senden von bestimmten Nachrichten oder das Ausführung oder das Starten von Programmen, beinhalten. Denn im Allgemeinen sind an eine Gruppe von Benutzern nicht nur Berechtigungen des Betriebssystems geknüpft, sondern auch Berechtigungen auf Applikationsebene, welche durch Verknüpfungen mit Sicherheitsdomänen und Berechtigungsprofilen festgelegt werden.

Bei den Festlegungen von Zugriffsrechten auf eine IT-Ressource wird derzeit das so genannte Containment verwendet. Dabei wird von dem Benutzer ausgegangen, der die IT-Ressource erzeugt bzw. anlegt. Zur Festlegung der Zugriffsrechte werden zuerst alle Gruppen ermittelt, denen der erzeugende Benutzer angehört. Danach werden die Sicherheitsdomänen identifiziert, die mit diesen Gruppen verknüpft sind und mit Berechtigungsprofilen in Beziehung stehen, welche zum Anliegen und Löschen einer Ressource autorisieren. Schließlich wird die neue IT-Ressource den so ermittelten Sicherheitsdomänen zugewiesen. Mit Hilfe dieses Verfahrens wird der Zugriff auf die IT-Ressource nicht nur dem erzeugenden Benutzer selbst, sondern auch allen Benutzern ermöglicht, die mit diesem in einer Gruppenbeziehung stehen.

Es ist Aufgabe dieser Erfindung, die Zuteilung von Zugriffsrechten auf IT-Ressourcen durch ein Sicherheitsmanagementsystem zu optimieren.

Die Erfindung löst diese Aufgabe durch das in Anspruch 1 beschriebene Verfahren. Die Erfindung beruht auf der Erkenntnis, dass als ein entscheidendes Kriterium für die Zuteilung von Benutzungsrechten die Eigenschaften der jeweiligen IT-Ressource verwendet werden sollten, um so Zugriffsrechte möglichst zweckbezogen bzw. optimiert zuteilen zu können. Dementsprechend werden erfindungsgemäß Sicherheitsdomänen nach Maßgabe einer oder mehrerer Eigenschaften von IT-Ressourcen festgelegt. Für eine Sicherheitsdomäne kann dann eine Mehrzahl von Berechtigungsprofilen vorgesehen werden. Diese Berechtigungsprofile können entsprechend der Eigenschaft bzw. der Eigenschaften der Sicherheitsdomäne konzipiert werden. Beispielsweise erzeugt man speziell auf eine Sicherheitsdomäne Berechtigungsprofile, die an die Eigenschaft bzw. Eigenschaften der IT-Ressourcen innerhalb der Domäne angepasst worden sind. Alternativ kann sein, dass es bereits erzeugte Berechtigungsprofile gibt, d.h. ein Pool von Berechtigungsprofilen, aus dem geeignete für die Domäne verwendet bzw. mit ihr verknüpft werden.

Ein weiterer Schritt des Verfahrens besteht darin, der Domäne Benutzergruppen zuzuordnen, wobei diese Zuordnung direkt bzw. unmittelbar, aber auch mittelbar sein kann. Eine mittelbare Zuordnung wäre beispielsweise eine Zuordnung über das Berechtigungsprofil, wobei das Berechtigungsprofil wiederum mit der Domäne verknüpft ist. Die der Domäne zugeordneten Benutzergruppen werden mit den für die Domäne vorgesehenen Profilen verknüpft. Die Zuordnung von IT-Ressourcen zur Domäne erfolgt erfindungsgemäß nach Maßgabe der Eigenschaften von IT-Ressourcen bzw. der Eigenschaft von IT-Ressourcen, die die entsprechende Sicherheitsdomäne definiert. Schließlich erhalten die Benutzer von Benutzergruppen, welche der Domäne zugeordnet wurden, nach Maßgabe der mit Ihnen verknüpften Profilen Zugriffsrechte auf der Domäne zugeordneten IT-Ressourcen.

Das erfindungsgemäße Vorgehen erlaubt es, Sicherheitsdomänen so zu bilden, dass die Zugriffsberechtigungen für verschiedene Gruppen entsprechen der Bedürfnisse der Gruppen modelliert werden können. Es können gemeinsame Ressourcenpools für Benutzer mit stark differierenden Berechtigungsprofilen modelliert werden. Beispielsweise kann eine Modellierung entsprechend folgendem Prinzip erfolgen. Alle Benutzer der Gruppe X dürfen Ressourcen anlegen und gemeinsam mit einem Berechtigungsprofil Y bearbeiten, wobei Y Rechte zum Erzeugen und Löschen erhalten muss. Darüber hinaus dürfen Benutzer der Gruppe V die Ressourcen mit dem Berechtigungsprofil Z bearbeiten, wobei Z weder Rechte zum Erzeugen, noch Löschen, d. h. keine Rechte auf den Lebenszyklus der Ressource einräumt. Die Reihenfolge der bei dem erfindungsgemäßen Verfahren angegebenen Schritte kann vom Fachmann problemlos im Hinblick auf eine Optimierung für sein Sicherheitsmanagementsystem umgeändert werden. Das erfindungsgemäße Verfahren ist nicht auf die Reihenfolge der Auflistung der Schritte beschränkt; die möglichen Alternativen für verschiedene Verfahrensschrittreihenfolgen sind unmittelbar einsichtig. Die bei der Auflistung der Schritte verwendete Reihenfolge ist daher auch nicht als Beschränkung auf eine entsprechende zeitliche Reihenfolge der Verfahrensschritte zu verstehen.

Ein Beispiel für ein System, wo ein derartiges Verfahren zum Einsatz kommen kann, ist ein Netzmanagementsystem. In diesem Fall ist eine IT-Ressource beispielsweise durch ein Netzelement gegeben.

Das erfindungsgemäße Verfahren kann in Form von Regeln beschrieben und für einen automatischen Ablauf programmiert werden. Dafür stehen dem Fachmann geeignete Tools zur Verfügung; beispielsweise könnte ein XML-File gegeben sein, welches die entsprechenden Verfahrensschritte codiert.

Die vorliegende Erfindung umfasst auch ein Sicherheitsmanagementsystem (z.B. als integrierter Teil eines Netzmanagementsystems), welches Mittel aufweist, um das erfindungsgemäße Verfahren durchzuführen. Diese Mittel sind beispielsweise Softwareroutinen, die die einzelnen Verfahrensschritte automatisch durchführen.

Der Erfindungsgegenstand wird im Folgenden im Rahmen eines Ausführungsbeispiels an Hand einer Figur näher erläutert.

Die Figur stellt das schon in der Beschreibungseinleitung genauer beschriebene Schema in den Abhängigkeiten der einzelnen für die Erfindung relevanten Elemente dar. Im Rahmen des Ausführungsbeispiels wird angenommen, dass das Sicherheitsmanagementsystem Teil eines Netzmanagementsystems ist. Die IT-Ressourcen sind dann Netzressourcen aller Art, wie z. B. Objektinstanzen als Repräsentationen für Netzelemente zum Schalten von Verbindungen. In diesem Fall wäre das Berechtigungsprofil die Summe aller Operationen, die auf diese Objekte erlaubt sein soll.

Eigenschaften von Netzelementen, welche für die Festlegung von Sicherheitsdomänen verwendet werden können, sind beispielsweise
- Transmission Layer(s) oder Protokoll(e), welche(s) das Netzelement an seinen Ausgangsports unterstützt. Beispiele: SDH/SONET, ATM, PDH-E1, DSL-ATM
- Der Interworking Typ des Netzelements (Protokollumsetzung/-transformierung)
   Beispiele: PDH-T3/IP für Edge-Router, ATM/V5.1 für Kopplung Breitband-Access mit Schmalband-Vermittlungsstellen.
- Der IP Adressraum, in welchem das Netzelement im Ethernet des Betreibers zu liegen kommt.
   Beispiel für eine IP Adress Maske: 255.101.128.128
- Signalisierungstyp des Netzelements
   Beispiel: CCS#7 (Signaling System No. 7)
- Verbleibende Restbandbreite
- Ein Namensschema für den Anzeigenamen des Netzelements, mit dem der Netzbetreiber Anschlussbereiche definieren kann ohne diese im Netzmanagement modellieren zu müssen.
   Beispiel: "BonnSüd" als Präfix
- Topologische Kriterien wie z.B. Zugehörigkeit zu bestimmten Subnetzen.

Zur detaillierten Illustration wird im Folgenden zwei Eigenschaften herausgegriffen, um den Erfindungsgegenstand an Hand eines einfachen Falles zu beschreiben.

Es sei ein Netzplaner A gegeben, der Netzelemente aller Art erzeugen und löschen darf. A hat nur Zugriff auf die Netzelemente der Domäne "Airport", da sein Zuständigkeitsbereich auf die Informationsinfrastruktur eines Flughafens beschränkt ist. Alarmüberwacher B ist Spezialist für SDH-Übertragungstechnik (SDH: synchronous digital hierarchy) und ausschließlich für Netzelemente dieses Übertragungstyps zuständig. Alle von dem Netzplaner A erzeugten Netzelemente, die SDH unterstützen, sollen dem Alarmüberwacher B zugängig gemacht werden, ohne dass B Rechte zum Erzeugen oder Löschen hat.

Erfindungsgemäß wird mittels Eigenschaften der Netzelemente eine Sicherheitsdomäne definiert, um auf diese Anforderungen angepasste Zugriffsrechte generieren zu können. Es werden hier zwei Eigenschaften von Netzelementen zur Definition der Sicherheitsdomäne verwendet. Die erste Eigenschaft ist die Lage des Netzelements im Flughafenbereich. Diese Eigenschaft wird im Folgenden als "Airport" referenziert. Die zweite Eigenschaft ist, dass das Netzelement den SDH Transmission Layer unterstützt. Auf diese Eigenschaft wird im Folgenden mit "SDH" Bezug genommen. Eine Sicherheitsdomäne (SDH, Airport) wird nun definiert durch die beiden Netzelementeigenschaften, Unterstützung des SDH-Transmission Layers und Anordnung im Bereich des Flughafens. Netzelemente mit diesen Eigenschaften werden der Sicherheitsdomäne zugeordnet. Weiter werden zwei Benutzergruppen vorgesehen, die mit "Netzplaner Airport" und "Alarmüberwacher" bezeichnet werden. Netzplaner A und Alarmüberwacher B werden den entsprechenden Benutzergruppen zugeordnet. Bei einer entsprechend geringen Benutzerzahl können auch einzelne Benutzer die Rolle von Benutzergruppen ausfüllen. Für die beiden Benutzergruppen werden entsprechende Benutzerprofile vorgesehen, nämlich ein Profil A, welches die Berechtigung einräumt, Netzelemente aller Art zu erzeugen und zu löschen und ein Benutzerprofil B, welches keine Rechte zum Erzeugen Löschen von Netzelementen einräumt, aber zum Abfragen und Überprüfen des Status bzw. der Funktionstüchtigkeit der Netzelemente. Die Benutzergruppen "Netzplaner Airport" und "Alarmüberwacher" werden der Domäne (SDH, Airport) zugeordnet. Wenn nun ein neues Netzelement im Bereich des Flughafens durch den Netzplaner A erzeugt wird, so orientiert sich die Berechtigungsvergabe nicht wie im Stand der Technik allein der Gruppenzugehörigkeit des Netzplaners A. Stattdessen wird dieses Netzelement wird der Sicherheitsdomäne (SDH, Airport) zugeordnet. Dadurch wird veranlasst, dass die der Domäne zugeordneten Benutzergruppen "Netzplaner Airport" und "Alarmüberwacher" Zugriffsrecht entsprechend der mit ihnen verknüpften Profile erhalten. Die Zugriffsrechte sind somit auf die Benutzergruppen zugeschnitten. So darf z.B. die entsprechend Netzplanergruppe das Netzelement wieder löschen, während die Gruppe der Alarmüberwacher lediglich Kontrollfunktionen ausüben kann.

Diese Vorgänge können mittels Computeranweisungen codiert werden, so dass die entsprechende Schritte bzw. Zuweisungen automatisch erfolgen. Auf diese Weise kann die Erfindung auch problemlos auf die der Regel deutlich komplexeren Fälle der Realität angewendet werden.

## Patentansprüche

1. Verfahren zur optimierten Vergabe von Zugriffsrechten auf mittels eines Sicherheitsmanagementsystems verwaltete IT Ressourcen, bei dem
- eine Sicherheitsdomäne nach Maßgabe wenigstens einer Eigenschaft von IT Ressourcen festgelegt wird,
- eine Mehrzahl von Berechtigungsprofilen für die Sicherheitsdomäne vorgesehen wird,
- Benutzergruppen der Domäne zugeordnet werden,
- eine Verknüpfung der der Domäne zugeordneten Benutzergruppen mit für die Domäne vorgesehenen Profilen vorgenommen wird,
- IT Ressourcen nach Maßgabe der die Sicherheitsdomäne festlegenden Eigenschaft von IT Ressourcen bzw. nach Maßgabe der die Sicherheitsdomäne festlegenden Eigenschaften von IT Ressourcen der Sicherheitsdomäne zugeordnet werden, und
- der Domäne zugeordnete Benutzergruppen nach Maßgabe der mit ihnen verknüpften Profilen Zugriffsrechte auf der Domäne zugeordnete IT Ressourcen erhalten.

2. Verfahren nach Anspruch 1,
**dadurch gekennzeichnet, dass**
- das Sicherheitsmanagementsystem Teil eines Netzmanagementsystems ist und
- wenigstens eine IT Ressource ein Netzelement ist.

3. Verfahren nach Anspruch 1 oder 2,
**dadurch gekennzeichnet, dass**
- Zuweisungsregeln definiert sind, nach Maßgabe derer das Verfahren abläuft.

4. Verfahren nach einem der Ansprüche 3,
**dadurch gekennzeichnet, dass**
- die Zuweisungsregeln in einer Datei abgespeichert werden, welche bei der Durchführung des Verfahrens gelesen und interpretiert wird.

5. Sicherheitsmanagementsystem, welches zur Durchführung eines Verfahrens nach einem der Ansprüche 1 bis 4 angepasst ist.
